# EUROPÄISCHE PATENTANMELDUNG

(11) **EP 2 790 078 A1**
(43) Veröffentlichungstag der Anmeldung: **15.10.2014**
(21) Anmeldenummer: 13162911.5
(22) Anmeldetag: 09.04.2013
(51) Int. Cl.: G05B 19/418, H04L 9/00

(54) **Manipulationssicheres Regeln einer Prozess- und/oder Fertigungs- und/oder Stellanlage**

(71) Anmelder: Siemens Aktiengesellschaft, 80333 München (DE)
(72) Erfinder: Graf, Rene, 90443 Nürnberg (DE)

(57) **Zusammenfassung**

Die Erfindung betrifft ein Verfahren zum Regeln einer Prozess- und/oder Fertigungsanlage (10), bei welchem an zumindest einer Anlagenkomponente (12 bis 18) der Anlage (10) jeweils zumindest ein Beobachtungsdatensatz durch eine jeweilige Erfassungseinheit (20 bis 26) der Anlage (10) erfasst wird, jeder Beobachtungsdatensatz über einen Feldbus (28) verschlüsselt an eine zentrale Steuervorrichtung (30) der Anlage (10) übertragen wird, in der zentralen Steuervorrichtung (30) zumindest ein Stelldatensatz aus dem zumindest einen verschlüsselten Beobachtungsdatensatz gebildet wird, ohne hierbei den verschlüsselten Beobachtungsdatensatz zu entschlüsseln, und so jeweils ein verschlüsselter Stelldatensatz erzeugt wird, der über den Feldbus an Stelleinheiten (20 bis 26) der Anlage ausgesendet wird, und erst in Stelleinheiten (20 bis 26) der jeweilige verschlüsselte Stelldatensatz zum Stellen der zugehörigen Anlagenkomponente (12 bis 18) entschlüsselt wird.

## Beschreibung

Die Erfindung betrifft ein Verfahren zum Regeln einer Prozess- und/oder Fertigungsanlage, oder kurz Anlage. Zu der Erfindung gehören auch eine Erfassungs- und Stellvorrichtung für eine Anlagenkomponente der Anlage sowie eine zentrale Steuervorrichtung zum Regeln mehrerer Anlagenkomponenten über einen Feldbus. Schließlich gehört zu der Erfindung noch ein Computerprogrammprodukt zum Ertüchtigen einer herkömmlichen Anlage, so dass auch diese ein erfindungsgemäßes Verfahren durchführt.

In der Automatisierungstechnik werden Steuerungen eingesetzt, die über Zusatzbaugruppen analoge und digitale Signale mit einzelnen, zu steuernden Anlagenkomponenten der Anlage austauschen. Die Zusatzbaugruppe liest Beobachtungsdaten der ihr zugeordneten Anlagenkomponente, also beispielsweise Sensorsignale oder Zustandsparameter, aus und steuert daraufhin gemäß einem vorgegebenen Regelalgorithmus einen Aktor der Anlagenkomponente durch Stellsignale an. Eine solche Zusatzbaugruppe wird im Folgenden als Erfassungs- und Stellvorrichtung bezeichnet. Solche Erfassungs- und Stellvorrichtungen sind lokal an den einzelnen Anlagenkomponenten angeordnet. Bei kleinen Anlagen oder Maschinen kann auch direkt eine Signalverarbeitungseinheit angeordnet sein, die aus den aus den Beobachtungsdaten die passenden Stelldaten zum Erzeugen der Stellsignale lokal berechnet.

Bei größeren Anlagen sind dagegen in der Regel die Zusatzbaugruppen zwar weiterhin für die Signalwandlung lokal an den Anlagenkomponenten angeordnet und damit in der Anlage verteilt. Ihre Beobachtungsdaten werden aber über einen sogenannten Feldbus, beispielsweise einen Profi-Bus, an eine zentrale Steuervorrichtung übertragen, in welcher aus den einzelnen, zyklisch übertragenen Datensätzen aus Beobachtungsdaten der Erfassungs- und Stellvorrichtungen (Beobachtungsdatensätze) zugehörige Datensätze mit Stelldaten gemäß einem vorbestimmten Regelalgorithmus ermittelt werden. Die Stelldatensätze werden dann wieder über den Feldbus an die einzelnen Erfassungs- und Stellvorrichtungen übertragen, die daraufhin in der beschriebenen Weise die Stellsignale erzeugen.

Als Basis-Technologie bzw. für die physikalische Schicht für die Realisierung eines Feldbusses wird zunehmend auch das aus der Bürowelt bekannte Ethernet verwendet. Auch wird zunehmend zum Realisieren der zentralen Steuervorrichtung auf Standard-Technologie zurückgegriffen, also z.B. herkömmliche PCs (PC - Personal Computer) mit einem Betriebssystem, durch welches nicht nur das eigentliche Regelungsprogramm für den Regelalgorithmus, sondern auch weitere Nutzerprogramme ausgeführt werden. Entsprechend sind solche, auf Standard-Technologien basierende Anlagensteuerungen auch anfällig für das Abhören oder Manipulieren durch Dritte, wenn z.B. auf einer zentralen Steuervorrichtung ein Schadprogramm Zugriff auf die Beobachtungsdaten, das Regelungsprogramm oder die Stelldaten erhält. Aufgrund der Verwendung von Ethernet als Feldbus-Basis kann auch leicht physikalischer Zugang zum Anlagennetzwerk möglich sein.

Insbesondere bei sicherheitskritischen Anlagen, beispielsweise einem Kraftwerk oder einem Energieversorgungswerk für beispielsweise eine Stadt oder eine Signalanlage (Verkehr, Bahn), muss hier gegen das Abhören und Manipulieren ein wirksamer Schutz bereitgestellt sein. Während aus der Bürowelt bekannt ist, die Datenübertragung über ein Ethernet durch eine Verschlüsselung zu schützen, ist dies bei den zeitkritischen Anwendungen der Anlagenregelung nicht direkt umsetzbar. Die Eingangsdatensätze müssten bei der zentralen Steuervorrichtung dann nämlich zunächst entschlüsselt werden und später die große Menge der Ausgangsdaten, also die Stelldatensätze, vor dem Aussenden wieder verschlüsselt werden. Dies kostet Rechenzeit, die insbesondere bei Echtzeitanwendungen der Anlagenregelung oftmals die Leistungsfähigkeit der verfügbaren Prozessoren übersteigt. Denn in proprietären Steuerungen ist nicht zuletzt aus Kostengründen die Rechenleistung begrenzt.

Bei den zunehmend immer mehr eingesetzten sogenannten Soft-Steuerungen, die auf normalen PCs als Regelungsprogramm laufen, teilweise auch auf üblichen PC-Betriebssystemen, ist dieser Schutz zudem nicht ausreichend. Selbst wenn die Übertragung über ein Ethernet verschlüsselt erfolgt, so ergeben sich dennoch innerhalb der Steuervorrichtung vollkommen neue Angriffspunkte für die Manipulation der Regelungsdaten, d.h. der Beobachtungs- und Stelldaten, da ein über das PC-Betriebssystem eingeschleustes Schadprogramm direkt die Daten der Soft-Steuerung abhören und manipulieren kann, ohne dass dies bemerkt würde, da das Schadprogramm direkt auf beispielsweise den Hauptspeicher zugreifen kann und sich nicht per Kommunikation an das Regelungsprogramm für die Anlage ankoppeln muss.

Zukünftig wird das Problem der Datensicherheit bei der Anlagenregelung noch größer, da die Rechenleistung gemäß einer aktuellen Tendenz weniger in der Anlage selbst zu finden sein wird, sondern in einem eigenen Rechenzentrum für diese Anlage, das beispielsweise auch als PLC-Computerverbund (PLC - Programmable Logic Controller) realisiert sein kann, das ähnlich wie das aus der Bürowelt bekannte Cloud-Computing strukturiert sein wird.

Der Erfindung liegt die Aufgabe zugrunde, eine Anlagenregelung mit lokal an den Anlagenkomponenten angeordneten Erfassungs- und Stellvorrichtungen einerseits und einer zentralen Steuervorrichtung andererseits gegen eine Manipulation der Regelungsdaten, d.h. der Beobachtungsdaten und der zugehörigen Stelldaten, abzusichern.

Die Aufgabe wird durch ein Verfahren gemäß Patentanspruch 1, eine Erfassungs- und Stellvorrichtung gemäß Patentanspruch 6, eine zentrale Steuervorrichtung gemäß Patentanspruch 7 sowie ein Computerprogrammprodukt gemäß Patentanspruch 8 gelöst. Vorteilhafte Weiterbildungen der Erfindung sind durch die Unteransprüche gegeben.

Das erfindungsgemäße Verfahren realisiert eine Regelung einer Prozess- und/oder Fertigungs- und/oder Stellanlage, also beispielsweise einer Flaschenabfüllanlage oder eines Kraftwerks oder einer Signalstellanlage. An zumindest einer Anlagenkomponente der Anlage, also beispielsweise einem Fließband, einem Abfüllautomaten oder einem steuerbaren Ventil, wird jeweils zumindest ein Beobachtungsdatensatz durch eine jeweilige Erfassungseinheit der Anlage erfasst. Ein Beobachtungsdatensatz besteht aus Beobachtungsdaten, wie etwa Messdaten oder Zustandsparameterwerten, welche einen aktuellen Zustand der Anlagenkomponente beschreiben. Jeder Beobachtungsdatensatz wird über einen Feldbus an eine zentrale Steuervorrichtung der Anlage übertragen. Als Feldbus kann beispielsweise ein Ethernet oder ein Profi-Bus vorgesehen sein. Durch die zentrale Steuervorrichtung wird in Abhängigkeit von zumindest einem übertragenen Beobachtungsdatensatz, der von der Steuervorrichtung empfangen worden ist, zumindest ein zugehöriger Stelldatensatz gebildet, also ein Datensatz mit Stelldaten zum Erzeugen von Stellsignalen für Aktoren der Anlagenkomponenten. Der zumindest eine Stelldatensatz wird dann über den Feldbus jeweils an zumindest eine Stelleinheit der Anlage übertragen, durch die dann jeweils zumindest eine Anlagenkomponente der Anlage in Abhängigkeit von dem übertragenen Stelldatensatz eingestellt wird. Dies kann sie in der bekannten Weise durch Erzeugen entsprechender Stellsignale aus den Stelldaten machen, wobei dann die Stellsignale entsprechende Aktoren beeinflussen.

Um nun bei dieser Anlagenstruktur einen Schutz gegen ein Abhören oder sogar Manipulieren zu erreichen, wird bei dem erfindungsgemäßen Verfahren in jeder Erfassungseinheit der jeweils zu übertragende Beobachtungsdatensatz verschlüsselt und im verschlüsselten Zustand übertragen. Anders als im Stand der Technik sorgt dies aber nicht für einen zusätzlichen Rechenaufwand in der Steuervorrichtung. In der zentralen Steuervorrichtung wird nämlich jeder Stelldatensatz aus dem zumindest einen verschlüsselten Beobachtungsdatensatz direkt gebildet, d.h. ohne den Beobachtungsdatensatz hierzu vorher zu entschlüsseln. Es wird also aus verschlüsselten Beobachtungsdaten unmittelbar, direkt ein verschlüsselter Stelldatensatz ermittelt, der dann über den Feldbus an die zumindest eine Stelleinheit übertragen wird. Erst in dieser Stelleinheit wird dann der jeweilige verschlüsselte Stelldatensatz, der über den Feldbus empfangen worden ist, zum Stellen der zugehörigen Anlagenkomponente entschlüsselt.

Die Erfindung weist zum einen den Vorteil auf, dass in der zentralen Stellvorrichtung kein zusätzlicher Berechnungsaufwand zum Entschlüsseln der Beobachtungsdaten und zum erneuten Verschlüsseln der Stelldaten anfällt. Ein weiterer großer Vorteil besteht darin, dass auch innerhalb der zentralen Stellvorrichtung nur verschlüsselte Regelungsdaten (Beobachtungsdaten und Stelldaten) vorliegen, so dass auch ein Schadprogramm für den Fall, dass es Zugriff auf den Speicherbereich für die Regelungsdaten hat, die Regelungsdaten weder interpretieren noch gezielt oder unbemerkt manipulieren kann.

Kern der Erfindung ist also die Verwendung bestimmter Verschlüsselungsverfahren, so dass die Regelungsdaten in der zentralen Steuerung zu deren Verarbeitung nicht entschlüsselt werden müssen. Ein sinnvolles Verschlüsselungsverfahren kann hierbei natürlich nur im Zusammenhang mit den verwendeten Regelungsalgorithmen gefunden werden.

Ein sehr einfaches Verfahren, das allerdings nicht unbedingt zu dem erstgenannten Vorteil der geringen Rechenlast führt, besteht darin, dass durch die Erfassungseinheit mit einem jeweiligen Beobachtungsdatensatz nicht nur die wahren, tatsächlichen Beobachtungsdaten gesendet werden, sondern zusätzlich ein weiterer Teildatensatz mit falschen Beobachtungsdaten. Dabei wissen dann nur die Erfassungseinheit und die zugehörige Stelleinheit, welche der in dem Beobachtungsdatensatz enthaltenen Beobachtungsdaten die wahren Daten sind. Die Position der wahren Beobachtungsdaten innerhalb eines Beobachtungsdatensatzes kann z.B. per Zufallsfunktion variiert werden. Wird nun ein solcher durch falsche Beobachtungsdaten erweiterter Beobachtungsdatensatz an die zentrale Stellvorrichtung gesendet, können durch diese zu allen Beobachtungsdaten (den wahren und den falschen) zugehörige Stelldaten berechnet werden und diese dann in einem Stelldatensatz zusammengefasst und an die Stelleinheit übertragen werden. In der Stelleinheit ist dann ja wieder bekannt, welche dieser Stelldaten tatsächlich für das Stellen der Anlagenkomponente geeignet sind. Ein Abhören solcher um falsche Daten erweiterten Regelungsdaten erlaubt es dagegen einem Beobachter oder einem manipulierenden Programm nicht, einen Rückschluss auf den tatsächlichen Zustand der Anlage zu ziehen.

Diese Form der Verschlüsselung beruht allerdings nur auf einem Verstecken der wahren Regelungsdaten. Eine andere Ausführungsform des Verfahrens sieht vor, zum Verschlüsseln zumindest eines der zu übertragenden Beobachtungsdatensätze diesem ein Bit-Muster mittels einer Bit-Operation aufzuprägen. Zum Entschlüsseln des zugehörigen verschlüsselten Stelldatensatzes wird dann durch die Stelleinheit das Bit-Muster wieder durch eine inverse Bit-Operation entfernt. Diese Weiterbildung kann für Stelldaten verwendet werden, bei welchen durch die zentrale Steuervorrichtung einfache Datenverknüpfungen der Beobachtungsdaten vorgenommen werden, die sich daher auch leichter mit diesen Verfahren kombinieren lassen als beispielsweise komplexe Rechnungen. Ein Beispiel für eine solche reversible Bit-Operation für Bit-Muster ist die XOR-Operation.

Eine andere Weiterbildung des Verfahrens sieht vor, dass zum Verschlüsseln zumindest eines der zu übertragenden Beobachtungsdatensätze dessen Beobachtungsdaten durch eine lineare oder eine affine Transformation transformiert werden und anschließend zum Entschlüsseln jedes zugehörigen verschlüsselten Stelldatensatzes dieser mittels einer zur Transformation korrespondierenden Rücktransformation transformiert wird. Ein einfaches Beispiel verdeutlicht das Prinzip: Die Zahlen 5 und 7 werden verschlüsselt, indem man sie verdoppelt. Die neuen Werte lauten 10 und 14, die dann an eine zentrale Steuervorrichtung übertragen werden können. Addiert man beide in der Steuervorrichtung, so erhält man 24. Macht man nun die Verdoppelung der Ausgangsdaten (Zahlen 5 und 7) in der Stelleinheit wieder rückgängig, bedeutet dies, dass man das Ergebnis (24) halbieren muss. Es kommt also 12 heraus. Zählt man die Ausgangszahlen 5 und 7 dagegen direkt zusammen, d.h. unverschlüsselt, ist die Summe ebenfalls 12. Die zentrale Steuervorrichtung kann weiterhin den unveränderten Regelalgorithmus verwenden, wenn dieser hier in der Addition der beiden Zahlen besteht. Es kommt nach dem Entschlüsseln dasselbe Ergebnis heraus. In diesem Fall ist die Verschlüsselung also ein nur der Erfassungseinheit und der Stelleinheit bekannter Multiplikationsfaktor. Ein Beobachter kann ohne Kenntnis des Multiplikationsfaktors dagegen nicht erkennen, welches die korrekten Werte sind.

Eine besonders flexible und für viele unterschiedliche Regelalgorithmen verwendbare Weiterbildung des Verfahrens sieht vor, dass zum Verschlüsseln zumindest eines der zu übertragenden Beobachtungsdatensätze, bevorzugt mehrerer, insbesondere aller, Beobachtungsdatensätze, der jeweilige Beobachtungsdatensatz mittels einer homomorphen Verschlüsselung durch die jeweilige Erfassungseinheit verschlüsselt wird und in der zentralen Steuereinheit der zumindest eine Stelldatensatz mittels einer an die homomorphe Verschlüsselung angepassten Berechnungsvorschrift gebildet wird. Homomorphe Verschlüsselungen sind bisher nur aus dem Bereich des Data-Mining bekannt. Mittels einer homomorphen Verschlüsselung lässt sich eine große Anzahl an Rechenoperationen auf verschlüsselten Beobachtungsdaten durchführen, die dann direkt zu verschlüsselten Stelldaten führen. Diese können von einer Stelleinheit für das Stellen der Anlagenkomponente genutzt werden kann, indem die verschlüsselten Stelldaten in der Stelleinheit mittels einer entsprechenden Entschlüsselung für die homomorphe Verschlüsselung entschlüsselt werden.

Hierbei ist dann allerdings der Berechnungsalgorithmus in der zentralen Steuervorrichtung anzupassen. Dieser Aspekt wird durch die erfindungsgemäße zentrale Steuervorrichtung im Allgemeinen abgedeckt, also nicht nur im Zusammenhang mit der homomorphen Verschlüsselung. Die erfindungsgemäße zentrale Steuervorrichtung weist eine Übertragungseinheit, z.B. eine Profinet- oder Ethernet-Kommunikationsmodul, und eine Verarbeitungseinheit auf, z.B. ein Prozessorsystem. Die Übertragungseinheit ist dazu ausgelegt, über einen Feldbus verschlüsselte Beobachtungsdatensätze zu empfangen und daraus von der Verarbeitungseinheit gebildete, zugehörige verschlüsselte Stelldatensätze über den Feldbus wieder auszusenden. Die Verarbeitungseinheit ist dazu ausgelegt, aus den verschlüsselten Beobachtungsdatensätzen die zugehörigen verschlüsselten Stelldatensätze ohne ein vorheriges Entschlüsseln der Beobachtungsdatensätze in der beschriebenen Weise zu ermitteln. Hierzu wird in der Steuervorrichtung ein Regelalgorithmus verwendet, der aus einem Standard-Regelalgorithmus gebildet ist, also einem Regelalgorithmus, der unverschlüsselte Beobachtungsdatensätze zu unverschlüsselten Stelldatensätzen verarbeitet. Der bei der erfindungsgemäßen Stellvorrichtung verwendete Regelalgorithmus ist dahingehend angepasst, dass die durch ihn berechneten verschlüsselten Stelldatensätze nach ihrer Entschlüsselung ein Ergebnis liefern, das dasselbe ist, als wenn zunächst die verschlüsselten Beobachtungsdatensätze entschlüsselt und die entschlüsselten Beobachtungsdaten mit dem Standard-Regelalgorithmus verarbeitet worden wären.

Wie bereits ausgeführt, umfasst die Erfindung auch eine Erfassungs- und Stellvorrichtung, wie sie lokal an einer Anlagenkomponente angeordnet sein kann, um Beobachtungsdaten zu erfassen und anhand von Stelldaten einer zentralen Steuervorrichtung Stellsignale für einen Aktor der Anlagenkomponente abzugeben. Die erfindungsgemäße Erfassungs- und Stellvorrichtung umfasst in an sich bekannter Weise die Erfassungseinheit zum Erzeugen eines Beobachtungsdatensatzes, eine Übertragungseinheit zum Übertragen des Beobachtungsdatensatzes über einen Feldbus an eine zentrale Steuervorrichtung und zum Empfangen eines zugehörigen Stelldatensatzes von der zentralen Steuervorrichtung über den Feldbus. Des Weiteren ist eine Stelleinheit bereitgestellt, die in Abhängigkeit von dem Stelldatensatz zumindest ein Stellsignal an einen Aktor der Anlagenkomponente abgibt.

Bei der erfindungsgemäßen Erfassungs- und Stellvorrichtung ist dabei in der beschriebenen Weise aber nun vorgesehen, dass die Erfassungseinheit dazu ausgelegt ist, den Beobachtungsdatensatz vor dem Übertragen mit einer Verschlüsselungsmethode zu verschlüsseln, die der zentralen Steuervorrichtung unbekannt ist. Wenn dann die zugehörigen Stelldaten als verschlüsselter Stelldatensatz empfangen werden, wird dieser Stelldatensatz von der Stelleinheit vor dem Erzeugen des zumindest einen Stellsignals mit einer zur Verschlüsselungsmethode korrespondierenden Entschlüsselungsmethode entschlüsselt. Somit ist sichergestellt, dass die Regelungsdaten außerhalb der Erfassungs- und Stellvorrichtung nicht von einem Beobachter- oder Schadprogramm interpretiert oder gezielt manipuliert werden können.

Von der Erfindung sind auch Weiterbildungen der erfindungsgemäßen zentralen Steuervorrichtung einerseits und der Erfassungs- und Stellvorrichtung andererseits umfasst, welche Merkmale aufweisen, die bereits im Zusammenhang mit den entsprechenden Weiterbildungen des erfindungsgemäßen Verfahrens beschrieben worden sind. Aus diesem Grund werden die entsprechenden Weiterbildungen der zentralen Steuervorrichtung und der Erfassungs- und Stellvorrichtung hier nicht noch einmal erörtert.

Separat beansprucht ist ebenfalls eine zur Erfindung gehörige Anlage, welche als Prozess- und/oder Fertigungs- und/oder Stellanlage ausgestaltet sein kann und welche eine Ausführungsform der erfindungsgemäßen zentralen Steuervorrichtung sowie zumindest eine, insbesondere mehrere, Ausführungsformen der erfindungsgemäßen Erfassungs- und Stellvorrichtung umfasst. Die erfindungsgemäße Anlage ist dabei dazu ausgelegt, eine Ausführungsform des erfindungsgemäßen Verfahrens durchzuführen.

Schließlich gehört zu der Erfindung noch ein Computerprogrammprodukt. Bei diesem sind auf zumindest einem Speichermedium Computerprogramme gespeichert, von denen eines als ein zentrales Regelungsprogramm für eine zentrale Steuervorrichtung einer Prozess- und/oder Fertigungs- und/oder Stellanlage und zumindest ein weiteres als Betriebsprogramm für ein mit der zentralen Steuervorrichtung über einen Feldbus gekoppelte Erfassungs- und Stellvorrichtung einer Anlagenkomponente ausgebildet ist. Erfindungsgemäß sind die Computerprogramme dabei dazu ausgelegt, eine Ausführungsform des erfindungsgemäßen Verfahrens durchzuführen, wenn sie zusammen durch die genannten Vorrichtungen ausgeführt werden.

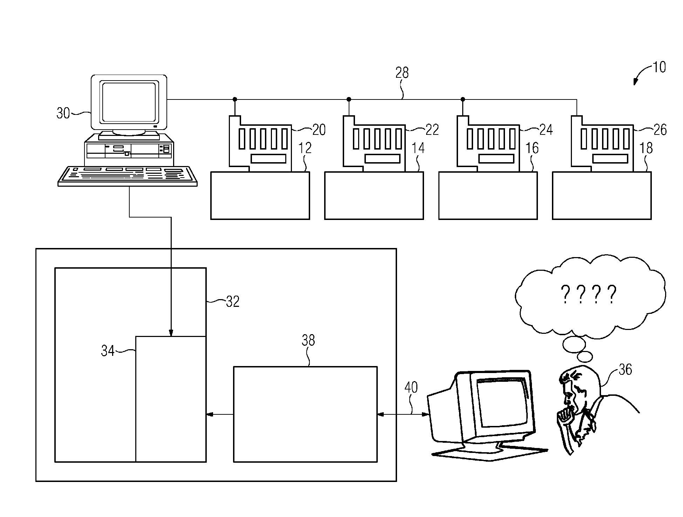

Im Folgenden ist die Erfindung noch einmal anhand eines konkreten Ausführungsbeispiels näher erläutert. Hierzu zeigt die einzige FIGUR eine Ausführungsform der erfindungsgemäßen Anlage.

Bei dem im Folgenden erläuterten Ausführungsbeispiel stellen die beschriebenen Komponenten der Ausführungsform und die beschriebenen Schritte des Verfahrens jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In der FIGUR ist eine Prozess- und/oder Fertigungs- und/oder Stellanlage oder kurz Anlage 10 gezeigt, in welcher einzelne Anlagenkomponenten 12, 14, 16, 18 durch Zusatzbaugruppen oder Erfassungs- und Stellvorrichtungen, kurz Vorrichtungen 20, 22, 24, 26, beobachtet und gesteuert werden. Jede der Vorrichtungen 20, 22, 24, 26 kann dabei an der jeweiligen Anlagenkomponente 12, 14, 16, 18, die ihr zugeordnet ist, oder in deren Nähe angeordnet sein. Sie erfassen zum einen Beobachtungsdaten, beispielsweise Sensorsignale oder Zustandsparameter, und erzeugen zum anderen Stellsignale zum Stellen von Aktoren der jeweiligen Anlagenkomponente 12, 14, 16, 18. Hierzu weist jede der Vorrichtungen 20, 22, 24, 26 eine jeweilige, nicht näher dargestellte Erfassungseinheit und Stelleinheit auf, die beispielsweise als Programmmodule in einem Programm einer speicherprogrammierbaren Steuerung bereitgestellt sein können.

Jede der Vorrichtungen 20, 22, 24, 26 ist über eine (nicht näher dargestellte) Übertragungseinheit, beispielsweise ein Bus-Kommunikationsmodul, über einen Feldbus 28 mit einer zentralen Steuervorrichtung 30, beispielsweise eine Workstation oder einem Personalcomputer, verbunden. Durch die zentrale Steuervorrichtung 30 wird ein Regelalgorithmus ausgeführt, der als Eingabedaten die Beobachtungsdaten der Vorrichtungen 20, 22, 24, 26 als jeweilige, zu vorbestimmten Zeitpunkten übertragene Beobachtungsdatensätze empfängt und hieraus Stelldaten erzeugt, die als Stelldatensätze an die jeweiligen Vorrichtungen 20, 22, 24, 26 über den Feldbus 28 wieder ausgesendet werden. Die zentrale Steuervorrichtung 30 kann zum Bereitstellen des Regelalgorithmus ein Steuerprogrammmodul 32 aufweisen, von welchem über eine Übertragungseinrichtung der Steuervorrichtung 30 die Beobachtungsdaten empfangen werden und die daraus ermittelten Stelldaten erzeugt werden. Die Beobachtungsdaten und die Stelldaten bilden zusammen Regelungsdaten 34, die einen Bestandteil des Steuerprogrammmoduls 32 bilden.

Bei der zentralen Steuervorrichtung 30 muss es sich nicht um dedizierte Hardware handeln, sondern es können auch weitere Benutzerapplikationen durch die zentrale Steuervorrichtung 30 bereitgestellt sein. Beispielsweise kann die zentrale Steuervorrichtung 30 ein zentraler Server sein oder ein Arbeitsplatzcomputer, die außerhalb einer Fertigungshalle angeordnet ist, in welcher sich die Anlagenkomponenten 12 bis 18 und die zugehörigen Vorrichtungen 20 bis 26 befinden. In dem gezeigten Beispiel ist es einer nicht autorisierten Person, d.h. einem Hacker 36, gelungen, ein Schadprogramm 38 in die Steuervorrichtung 30 einzuschleusen und das Schadprogramm auszuführen. Über eine Datenverbindung 40, beispielsweise eine Internetverbindung, liest der Hacker 36 mittels des Schadprogramms 38 die Beobachtungsdaten 34 beispielsweise aus einem Hauptspeicher der zentralen Steuervorrichtung 30 aus, um Informationen über den Zustand der Anlage 10 zu erhalten. Bei der Anlage 10 ist aber wirkungsvoll verhindert, dass der Hacker 36 die Regelungsdaten 34 interpretieren kann, geschweige denn gezielt manipulieren kann.

Hierzu werden durch die Vorrichtungen 20 bis 26 die jeweiligen Beobachtungsdatensätze verschlüsselt und nur in verschlüsselter Form über den Datenbus 28 an die zentrale Steuervorrichtung 30 ausgesendet. Der Regelungsalgorithmus des Steuerprogrammmoduls 32 ist dahingehend angepasst, dass er die Berechnung der Stelldatensätze auf Grundlage der verschlüsselten Beobachtungsdatensätze durchführt, ohne hierzu die Beobachtungsdatensätze zuvor entschlüsseln zu müssen. Die Regelungsdaten 34 liegen somit durchgehend nur in verschlüsselter Form außerhalb der Vorrichtungen 20 bis 26 vor.

Eine verschlüsselte Übertragung über den Feldbus 28 wäre hier nicht ausreichend, da mittels des Schadprogramms 38 spätestens in der zentralen Steuervorrichtung 30 die Regelungsdaten 34 wieder "als Klartext" sichtbar wären. Bei der Anlage 10 sind aber die Regelungsdaten auch innerhalb der zentralen Steuerungsvorrichtung 30 zu jedem Zeitpunkt verschlüsselt, so dass selbst ein Speicherabbild der zentralen Steuervorrichtung 30 nicht ausreicht, um die Regelungsdaten in einer interpretierbaren Form zu erhalten. Damit wird eine vollständige Datenintegrität erzielt, die für fehlersichere Systeme einen erheblichen Mehrwert darstellt.

Da nicht nur das Abhören, sondern auch die Manipulation der Regelungsdaten über eine parallel zur Steuerung laufende Schadsoftware 38 verhindert wird, bietet dieses Verfahren einen sicheren Schutz der Anlage 10. Des Weiteren erspart die direkte Verarbeitung der verschlüsselten Beobachtungsdatensätze den Rechenaufwand für die ansonsten notwendige Ver- und Entschlüsselung in der zentralen Steuervorrichtung 30, so dass sich das Laufzeitverhalten der Steuervorrichtung 30 nicht verändert gegenüber einer Verarbeitung mit nichtverschlüsselten Regelungsdaten.

Als geeignete Verschlüsselung, die auch eine Berechnung der Stelldaten auf Grundlage verschlüsselter Beobachtungsdaten erlaubt, kann beispielsweise eine homomorphe Verschlüsselung der Beobachtungsdaten verwendet werden. Das Steuerprogrammmodul 32 der zentralen Steuervorrichtung 30 verarbeitet dann die Beobachtungsdaten, ohne den Schlüssel für die Entschlüsselung zu kennen und ohne somit die Beobachtungsdaten entschlüsseln und interpretieren zu können. Die Rechenoperationen des Steuerprogrammmoduls 32 sind dabei transparent für die Verschlüsselung und das Ergebnis, d.h. die Stelldaten, und liegt ebenfalls in verschlüsselter Form vor und kann über den Feldbus 28 wieder zu den entsprechenden Geräten verschickt werden. Möglich ist die Verwendung einer durchgehenden Verschlüsselung, da in Steuerungen oft eher einfache Datenverknüpfungen vorgenommen werden, die sich daher auch leichter mit einem homomorphen Verschlüsselungsverfahren kombinieren lassen als komplexe Rechnungen.

Für die typischen Operationen einer Steuerung müssen lediglich beim Entwickeln der Anlage passende Methoden und Funktionen für die typischen Berechnungsvorgänge ermittelt werden. Beispiele hierzu können aus dem Stand der Technik entnommen werden, wo bereits Sammlungen von geeigneten homomorphen Funktionen im Zusammenhang mit dem Data-Mining gesammelt worden sind. Eine neben der bereits genannten Datenquelle ist eine weitere Datenquelle beispielsweise die folgende Internetseite: www.heise.de/tr/artikel/Mehr-Sicherheit-fuer-Datenwolken-1324650.html. Die Vorteile dieser Art der Verschlüsselung zeigen sich vor allem dann, wenn die Steuerung nicht auf einer eigenen Hardware läuft, sondern als ein Steuerprogrammmodul 32 neben vielen anderen auf einem PC oder aber auch auf großen Rechnerfarmen bereitgestellt ist. In beiden Fällen muss effektiv verhindert werden, dass ein anderes Programm durch Ausnutzung beliebiger Schwachstellen der eingesetzten Betriebssysteme an die Regelungsdaten des Steuerprogrammmoduls gelangt.

Durch das Beispiel ist gezeigt, wie gemäß der Erfindung die Verwendung bestimmter Verschlüsselungsverfahren dazu genutzt werden kann, dass die Regelungsdaten außerhalb der Zusatzbaugruppen für die einzelnen Anlagenkomponenten zum Regeln eines Betriebs einer Prozess- und/oder Fertigungs- und/oder Stellanlage nicht entschlüsselt werden müssen, d.h. also die Regelungsdaten außerhalb der einzelnen Komponenten in interpretierbarer oder gezielt manipulierbarer Form vorliegen müssen.

**Bezugszeichenliste**

| | |
|---|---|
| 10 | Prozess- und/oder Fertigungsanlage |
| 12, 14, 16, 18 | Anlagenkomponente |
| 20, 22, 24, 26 | Erfassungs- und Stellvorrichtung |
| 28 | Feldbus |
| 30 | Zentrale Steuerungsvorrichtung |
| 32 | Steuerprogrammmodul |
| 34 | Regelungsdaten |
| 36 | Hacker |
| 38 | Schadprogramm |
| 40 | Internetverbindung |

## Patentansprüche

1. Verfahren zum Regeln einer Prozess- und/oder Fertigungs-und/oder Stellanlage (10), bei welchem
- an zumindest einer Anlagenkomponente (12 bis 18) der Anlage (10) jeweils zumindest ein Beobachtungsdatensatz durch eine jeweilige Erfassungseinheit (20 bis 26) der Anlage (10) erfasst wird,
- jeder Beobachtungsdatensatz über einen Feldbus (28) an eine zentrale Steuervorrichtung (30) der Anlage (10) übertragen wird,
- durch die zentrale Steuervorrichtung (30) in Abhängigkeit von zumindest einem übertragenen Beobachtungsdatensatz zumindest ein zugehöriger Stelldatensatz gebildet wird,
- der zumindest eine Stelldatensatz über den Feldbus (28) jeweils an zumindest eine Stelleinheit (20 bis 26) der Anlage (10) übertragen wird und
- durch die zumindest eine Stelleinheit (20 bis 26) zumindest eine Anlagenkomponente (12 bis 18) der Anlage (10) in Abhängigkeit von dem übertragenen Stelldatensatz eingestellt wird; **dadurch gekennzeichnet, dass**
- in jeder Erfassungseinheit (20 bis 26) der jeweils zu übertragende Beobachtungsdatensatz verschlüsselt und im verschlüsselten Zustand übertragen wird,
- in der zentralen Steuervorrichtung (30) beim Bilden des zumindest einen Stelldatensatzes jeder Stelldatensatz aus dem zumindest einen verschlüsselten Beobachtungsdatensatz gebildet wird, ohne hierbei den verschlüsselten Beobachtungsdatensatz zu entschlüsseln, und so jeweils ein verschlüsselter Stelldatensatz erzeugt und übertragen wird, und
- erst in jeder Stelleinheit (20 bis 26) der jeweilige verschlüsselte Stelldatensatz zum Stellen der zugehörigen Anlagenkomponente (12 bis 18) entschlüsselt wird.

2. Verfahren nach Anspruch 1, wobei zum Verschlüsseln zumindest eines der zu übertragenden Beobachtungsdatensätze durch die Erfassungseinheit in einem jeweiligen Beobachtungsdatensatz nicht nur wahre, tatsächliche Beobachtungsdaten gesendet werden, sondern zusätzlich ein weiterer Teildatensatz mit falschen Beobachtungsdaten.

3. Verfahren nach einem der vorhergehenden Ansprüche, wobei zum Verschlüsseln zumindest eines der zu übertragenden Beobachtungsdatensätze diesem ein Bit-Muster mittels einer Bit-Operation aufgeprägt wird und zum Entschlüsseln jedes zugehörigen verschlüsselten Stelldatensatzes das Bit-Muster wieder durch eine inverse Bit-Operation entfernt wird.

4. Verfahren nach einem der vorhergehenden Ansprüche, wobei zum Verschlüsseln zumindest eines der zu übertragenden Beobachtungsdatensätze dieser durch eine lineare oder eine affine Transformation transformiert wird und zum Entschlüsseln jedes zugehörigen verschlüsselten Stelldatensatzes dieser mittels einer zur Transformation korrespondierenden Rücktransformation transformiert wird.

5. Verfahren nach einem der vorhergehenden Ansprüche, wobei zum Verschlüsseln zumindest eines der zu übertragenden Beobachtungsdatensätze dieser mittels einer homomorphen Verschlüsselung verschlüsselt wird und in der zentralen Steuereinheit der zumindest eine Stelldatensatz mittels einer an die homomorphe Verschlüsselung angepassten Berechnungsvorschrift gebildet wird.

6. Erfassungs- und Stellvorrichtung (20 bis 26) für eine Anlagenkomponente (12 bis 18) einer Prozess- und/oder Fertigungs- und/oder Stellanlage (10), mit einer Erfassungseineinheit, einer Übertragungseinheit und einer Stelleinheit, wobei die Erfassungseinheit dazu ausgelegt ist, einen Beobachtungsdatensatz, der einen aktuellen Zustand der Anlagenkomponente beschreibt, aus Messdaten und/oder Zustandsparametern zu bilden, und wobei die Übertragungseinheit dazu ausgelegt ist, den Beobachtungsdatensatz über einen Feldbus (28) an eine zentrale Steuervorrichtung (30) auszusenden und von dieser (30) über den Feldbus (28) einen zugehörigen Stelldatensatz zu empfangen, und wobei die Stelleinheit dazu ausgelegt ist, in Abhängigkeit von dem Stelldatensatz zumindest ein Stellsignal an einen Aktor der Anlagenkomponente (12 bis 18) abzugeben,
**dadurch gekennzeichnet, dass**
die Erfassungseinheit dazu ausgelegt ist, den Beobachtungsdatensatz vor dem Übertragen mit einer der zentralen Steuervorrichtung unbekannten Verschlüsselungsmethode zu verschlüsseln, und dass
die Stelleinheit dazu ausgelegt ist, den Stelldatensatz vor dem Erzeugen des zumindest einen Stellsignals mit einer zur Verschlüsselungsmethode korrespondierenden Entschlüsselungsmethode zu entschlüsseln.

7. Zentrale Steuervorrichtung (30) zum Regeln von Anlagenkomponenten (12 bis 18) einer Prozess- und/oder Fertigungs-und/oder Stellanlage (10), mit einer Übertragungseinheit und einer Verarbeitungseinheit, wobei die Übertragungseinheit dazu ausgelegt ist, über einen Feldbus (28) verschlüsselte Beobachtungsdatensätze zu empfangen und daraus von der Verarbeitungseinheit gebildete, zugehörige verschlüsselte Stelldatensätze über den Feldbus (28) auszusenden, und wobei die Verarbeitungseinheit dazu ausgelegt ist, aus den verschlüsselten Beobachtungsdatensätzen die zugehörigen verschlüsselten Stelldatensätze ohne eine Entschlüsselung der Beobachtungsdatensätze mittels eines vorgegebenen Regelalgorithmus zu ermitteln, welcher dahingehend aus einem Standard-Regelalgorithmus gebildet ist, dass das Entschlüsseln der verschlüsselten Stelldatensätze dasselbe Ergebnis ergibt, als wenn zunächst die verschlüsselten Beobachtungsdatensätze entschlüsselt und anschließend die entschlüsselten Beobachtungsdatensätze mittels des Standard-Regelalgorithmus verarbeitet worden wären.

8. Computerprogrammprodukt mit auf zumindest einem Speichermedium gespeicherten Computerprogrammen, von denen eines als ein zentrales Steuerprogramm (32) für eine zentrale Steuervorrichtung (30) einer Prozess- und/oder Fertigungs- und/oder Stellanlage (10) und zumindest ein weiteres als Betriebsprogramm für eine mit der zentralen Steuervorrichtung (30) über einen Feldbus (28) gekoppelte Erfassungs- und Stellvorrichtung (20 bis 26) einer Anlagekomponente (12 bis 18) ausgebildet ist,
**dadurch gekennzeichnet, dass**
die Computerprogramme zusammen dazu ausgelegt sind, bei Ausführung durch die genannten Vorrichtungen ein Verfahren nach einem der Ansprüche 1 bis 5 durchzuführen.
